# EUROPÄISCHE PATENTANMELDUNG

(11) **EP 0 700 979 A2**
(43) Veröffentlichungstag der Anmeldung: **13.03.1996**
(21) Anmeldenummer: 95202328.1
(22) Anmeldetag: 29.08.1995
(51) Int. Cl.: C09K 11/02, H01J 29/20

(54) **Beschichtungsverfahren für Lumineszenzpulver, Lumineszenzpulver und beschichteter Gegenstand**

(30) Priorität: 09.09.1994 DE 4432035
(71) Anmelder: Philips Patentverwaltung GmbH, D-22335 Hamburg (DE); Philips Electronics N.V., NL-5621 BA Eindhoven (NL)
(72) Erfinder: Opitz, Joachim, Dr., c/o Philips, D-22335 Hamburg (DE); Mayr, Walter, c/o Philips, D-22335 Hamburg (DE)
(74) Vertreter: Walz, Erich

(57) **Zusammenfassung**

Die Erfindung betrifft ein Verfahren zur Beschichtung von Lumineszenzpulver mit einer Beschichtung, die Siliziumdioxid enthält, das dadurch gekennzeichnet ist, daß in einem ersten Schritt Leuchtstoffpartikel in einer Lösung, die eine oder mehrere metallo-organische Verbindungen des Siliziums und gegebenenfalls metallo-organische Verbindungen weiterer Elemente in einem wasserhaltigen Lösungsmittelgemisch mit einem pH-Wert 1 < pH < 5 enthält, dispergiert werden und anschließend die metallo-organischen Verbindungen durch Hinzufügen von Ammoniak hydrolysiert werden.

Die so aufgebrachte SiO₂-haltige Beschichtung hat sehr gute mechanische und optische Eigenschaften. Sie ist dünn, bildet aber trotzdem eine homogene, dichte und vorallem kontinuierliche Schicht.

Ein weiterer Aspekt der Erfindung betrifft ein Lumineszenzpulver mit einer Beschichtung, die aus Siliziumoxid und mindestens einem Oxid eines weiteren Elementes besteht, wobei die weiteren Elemente aus der Gruppe Aluminium, Barium, Blei, Bor, Magnesium, Titan, Zink, Zirkon, Kobalt, Kupfer und Eisen ausgewählt sind.

Nach einem anderen Aspekt betrifft die Erfindung einen mit einem erfindungsgemäß beschichteten Lumineszenzpulver beschichteten Gegenstand, wie beispielsweise einen Leuchtschirm bzw. Bildschirm für eine Kathodenstrahlröhre oder -lampe oder für eine andere elektrische Entladungsröhren oder -lampen, insbesondere auch Farbfernsehbildschirme.

## Beschreibung

Die Erfindung betrifft ein Verfahren zur Beschichtung von Lumineszenzpulver mit einer Beschichtung, die Siliziumdioxid enthält, ein Lumineszenzpulver mit einer solchen Beschichtung und einen mit einem Lumineszenzpulver beschichteter Gegenstand, beispielsweise einen Leuchtschirm oder Bildschirm für eine Kathodenstrahlröhre oder -Lampe oder für eine andere elektrische Entladungsröhre oder -lampe.

Lumineszenzpulver, die nach dem üblichen Verfahren d.h. in einer Festkörperreaktion mit anschließender naßchemischer Reinigung hergestellt werden, neigen im allgemeinen zur Agglomeration. Dieses gilt besonders für die sulfidischen Lumineszenspulver, aber auch für viele andere Leuchtstoffe. Es ist daher schwierig, aus unbehandelten Leuchtstoffpulvern gleichmäßig dispergierte Beschichtungslösung für die Beschichtung von Leuchtschirmen, Bildschirmen von Fernsehern u.ä. zu erhalten.

Daher ist es üblich, Lumineszenzpulver mit einer Beschichtung zu versehen, um frei fließende und gut dispergierbare Pulver zu erhalten. Beschichtungen nach dem Stand der Technik, die primär die Agglomerationsneigung der Pulver reduzieren, bestehen im allgemeinen aus kleinen Partikeln, z.B. Submikronpartikeln, die auf die Leuchtstoffpartikel "aufgeleimt" werden. Beispielsweise wird in der JP 2-199187 (A) vorgeschlagen, aus Ethylsilikat, Ethanol und Ammoniak sphärische Silikatpartikel herzustellen und mit diesen spärischen Partikeln Leuchtstoffpartikel zu beschichten.

Eine derartige diskontinuierliche Beschichtung aus diskreten Partikeln ist jedoch unzureichend, wenn die Lumineszenzpulver bei ihrer weiteren Verwendung chemischen Angriffen ausgesetzt sind, wie es beispielsweise bei der Herstellung von Farbfernsehbildschirmen der Fall ist.

Zur Herstellung von Farbfernsehbildschirmen werden kleine Leuchtstoffpunkte oder -streifen im Submillimeter-Maßstab auf den Schirm aufgetragen. Dies geschieht mit photochemischen Methoden, bei denen man entweder photosensitive Suspensionen von Lumineszenzpulvern in Polyvinylalkohol mit Ammoniumdichromat als aktives System verwendet, wobei die Suspension durch Licht gehärtet wird, oder man verwendet Photoresistlacke, an denen die trockenen Lumineszenzpulver nach der Belichtung haften. Anschließend werden die Schirme noch einem Einbrennprozeß unterworfen, bei dem die nicht geschützten Lumineszenzpulver auch durch Sauerstoff und Luftfeuchtigkeit angegriffen werden.

Es ist deswegen ratsam, die Lumineszenzpulver durch eine kontinuierliche Beschichtung gegen den chemischen Angriff durch Chromat, Sauerstoff und Luftfeuchtigkeit zu schützen. Besonders Ammoniumdichromat ist ein starkes Oxidationsmittel und kann mit der Oberfläche des dispergierten Lumineszenzpulvers auch ohne Einwirkung von Licht reagieren ("Dunkelreaktion"), was zu unerwünschten Effekten auf den beschichteten Schirmen z.B. Schleierbildung führt.

Eine Methode zur Oberflächenbehandlung von Leuchtstoffpartikeln, die im wesentlichen darin besteht, einen kontinierlichen Film aus Siliziumdioxid auf der Oberfläche jedes Leuchtsstoffpartikels zu bilden, indem diese Leuchtstoffpartikel mit einer Lösung behandelt werden, die eine wässrige Lösung einer organischen alkalischen Verbindung wie Cholin, Tetramethylammoniumhydroxid, Tetraethylammoniumhydroxid, Tetrapropylammoniumhydroxid, Tetrabutylammoniumhydroxid, Tributylmonoethylammonium-hydroxid, Trimethylmonooctylammoniumhydroxid und Triethylmonophenylammoniumhydroxid und Siliziumdioxid in einer wässrigen Lösung enthalten, ist aus der US 4,287,229 bekannt.

Organische Amine sind jedoch in Verruf geraten, weil sie selbst oder die in ihnen enthaltenen Verunreinigungen karzinogen wirken. Die genannte Methode ist deshalb nicht für eine industrielle Fertigung geeignet.

Es ist daher Aufgabe der vorliegenden Erfindung, ein verbessertes Beschichtungsverfahren für Lumineszenzpulver zur Verfügung zu stellen, das für eine industrielle Fertigung geeignet ist und durch das ein Lumineszenzpulver erhalten wird, das gegen chemischen Angriff geschützt, fluid und leicht dispergierbar ist.

Erfindungsgemäß wird die Aufgabe gelöst durch ein Verfahren, das dadurch gekennzeichnet ist, daß in einem ersten Schritt Leuchtstoffpartikel in einer Lösung, die eine oder mehrere metallo-organische Verbindungen des Siliziums und gegebenenfalls metallo-organische Verbindungen weiterer Elemente in einem wasserhaltigen Lösungsmittelgemisch mit einem pH-Wert 1 < pH < 5 enthält, dispergiert werden und anschließend die metallo-organischen Verbindungen durch Hinzufügen von Ammoniak hydrolysiert werden.

Die so aufgebrachte SiO₂-haltige Beschichtung hat sehr gute mechanische und optische Eigenschaften. Sie ist dünn, bildet aber trotzdem eine homogene, dichte und vorallem kontinuierliche Schicht. Sie hat eine verbesserte Abriebfestigkeit, weil ihre Oberfläche glatt ist. Außerdem ist sie selbst beständig gegen viele Chemikalien, außer gegen starken Laugen und Flußsäure, und sie schützt das Substrat vor chemischen Angriffen, weil sie gleichmäßig dicht ist und gut auf dem Grundwerkstoff haftet.

Da die amorphe Beschichtung nur wenige und sehr kleine Poren enthält, ist die Beschichtung hochtransparent.

Die Oberfläche der Beschichtung ist hydrophil, das beschichtete Lumineszenzpulver ist daher gut benetzbar. Es bildet weder als trockenes Pulver noch in Lösung Agglomerate, sodaß sich mit den erfindungsgemäß beschichteten Lumineszenzpulvern sowohl mit trockenen als auch mit nassen Verfahren beschichtete Gegenstände mit homogener Beschichtung herstellen lassen.

Die verwendeten metallo-organischen Ausgangsverbindungen werden bereits in anderen Industriezweigen, z.B. in der Textil -und Papierindustrie, ohne Probleme eingesetzt.

Nach einer bevorzugten Ausführungsform des erfindungsgemäßen Verfahrens werden die Leuchtstoffpartikel bei einer Temperatur von 40-90°C dispergiert und die so erhaltene Dispersion vor der Hydrolyse mit Ammoniak auf Raumtemperatur abgekühlt.

Es hat sich gezeigt, daß durch ein solches Verfahren besonders homogen beschichtete Lumineszenzpulver erhalten werden und die separate Abscheidung sphärischer SiO₂-Partikel vollständig vermieden wird.

Es ist weiterhin bevorzugt, daß das Leuchtstoffpulver 1 bis 12 h in der ammoniakalischen Lösung dispergiert wird.

Dabei nimmt die Schichtdicke mit zunehmender Zeitdauer zu, bis sie einen Grenzwert von 50 bis 100nm erreicht.

Es kann auch bevorzugt sein, daß die weiteren Elemente Aluminium, Barium, Blei, Bor, Lanthan, Magnesium, Zink, Titan oder Zirkon sind und das Molverhältnis von den metallo-organischen Verbindungen des Siliziums zu den metallo-organischen Verbindungen der weiteren Elemente von 100: 0,1 bis 100:15 beträgt.

Die genannten Elemente werden in die amorphe Beschichtung eingebaut und modifizieren deren optische Eigenschaften. Beispielsweise wird das Reflexionsvermögen durch Variation des Brechungsindexes verändert. Der Brechungsindex wird erhöht duch PbO, BaO, La₂O₃, TiO₂, bei gleichzeitig hoher Farbzerstreuung bei Beschichtungen, die PbO enthalten und niedriger Farbzerstreuung, bei Beschichtungen, die BaO oder La₂O₃ enthalten. Beschichtungen mit BaO und besonders La₂O₃ vereinigen hohe Lichtbrechung mit geringer Farbstreuung.

Die ausgezeichnete Homogenität solcher Mehrkomponentenbeschichtungen wird dadurch ermöglicht, daß die Ausgangsverbindungen in Lösung homogen gemischt werden können, bevor sie hydrolysiert werden.

Zur Verbesserung der Farbwerte des Lumineszenzpulvers kann es bevorzugt sein, daß die weiteren Elemente farbgebende Elemente wie Kobalt, Kupfer und Eisen sind und das Molverhältnis von den metallo-organischen Verbindungen des Siliziums zu den metallo-organischen Verbindungen der farbgebenden Elemente von 100: 0,1 bis 100:5 beträgt.

Ein weiterer Aspekt der Erfindung betrifft ein Lumineszenzpulver mit einer Beschichtung, die aus Siliziumoxid und mindestens einem Oxid eines weiteren Elementes besteht, wobei die weiteren Elemente aus der Gruppe Aluminium, Barium, Blei, Bor, Magnesium, Titan, Zink, Zirkon, Kobalt, Kupfer und Eisen ausgewählt sind.

Nach einem anderen Aspekt betrifft die Erfindung einen mit einem erfindungsgemäß beschichteten Lumineszenzpulver beschichteten Gegenstand, wie beispielsweise einen Leuchtschirm bzw. Bildschirm für eine Kathodenstrahlröhre oder -lampe oder für eine andere elektrische Entladungsröhren oder -Lampen, insbesondere auch Farbfernsehbildschirme.

Im folgenden wird die Erfindung weiter beschrieben und anhand von Beispielen erläutert.

Das Substrat für das erfindungsgemäße Beschichtungsverfahren besteht aus anorganischen Leuchtstoffen nach dem Stand der Technik, wie sie beispielsweise in Ullmanns Encyklopädie der technischen Chemie, Band 16, S.179ff.,Weinheim, New York (1978) beschrieben sind. Insbesondere sind dies die grünen Leuchtstoffe Y₂SiO₅:Tb, ZnS:Cu,Au,Al; Zn,CdS:Cu,Al und CaS:Ce, die roten Leuchtstoffe Y₂O₂S:Eu, Y₂O₃:Eu und CaS:Eu, sowie der blaue Leuchtstoffstoff ZnS:Ag in der Wurzit- und in der Sphalerit-Modifikation.

Diese können als Primärteilchen oder als mit Pigmenten und Latex vorbehandelte Leuchtstoffe vorliegen. Die Korngröße der Leuchtstoffpartikel ist nicht kritisch. Die Primärkorngröße handelsüblicher Leuchtstoffe beträgt etwa 3 bis 15µ.

Diese Substratpartikel werden mit einer dünnen, gleichmäßigen und kontinuierlichen Schicht aus Siliziumdioxid, oder Siliziumdioxid mit Beimischungen von PbO, BaO, La₂O₃, TiO₂, B₂O₃, Al₂O₃, ZrO₂, ZnO, MgO, CoO, Fe₂O₃ und CuO beschichtet.

Als Ausgangsverbindungen für die Beschichtungen werden die metallo-organischen Verbindungen der genannten Oxide eingesetzt, d.h.Verbindungen, bei denen die genannten Metalle und Halbmetalle über Sauerstoff an einen organischen Rest gebunden sind. Solche metallo-organischen Verbindungen sind z.B. Alkoxide, Acetylacetonate oder Carboxylate.

Zweckmäßigerweise verwendet man metallo-organische Ausgangsverbindungen, die wasser- und alkohollöslich sind und in saurem Reaktionsmedium keinen Niederschlag aus unlöslichen Reaktionsprodukten bilden. Als Ausgangsverbindung für Siliziumdioxid kann man bevorzugt Tetraethoxysilan, Tetramethoxysilan oder Polyethylsilikat verwenden, für Bleioxid Bleiacetat, Pb-2-ethylhexanoat oder Pb-neodecanoat, für Bariumoxid Bariumacetat, für Lanthanoxid Lanthanisopropoxide, wasserfreies Lanthanacetat oder Lanthanacetylacetonat, für Titanoxid und Zirkonoxid die Isopropylate, die Butylate und die Acetylacetonate und Ti-di-methoxy-di-neodecanate, für Boroxid die sog. Borsäureester z.B. Borsäuretriethylester B(0C₂H₅)₃, für Aluminiumoxid die Formiate HO-Al(OOCH)₂.aq oder Al(OOCH)₃.aq oder die Alkoholate wie Aluminiumisopropylat, für Zinkoxid Zinkacetat, für Magnesiumoxid Magnesium-methoxid Mg(OCH₃)₂ für Cobaltoxid Cobalt(II)-acetylacetonat, für Eisenoxid das Eisen- (III)-acetylacetonat Fe(O₂H₇C₅)₃ und für Kupfer Kupfer(II)-acetylacetonat.

Diese Ausgangsverbindungen werden in einem wasserhaltigen Lösungsmittelgemisch gelöst, in dem die genannten Ausgangsverbindungen gut löslich sind und das die Leuchtstoffpartikel gut benetzt, z.B. Wasser/ Alkoholgemische mit verschiedenen Alkoholen wie Methanol, Ethanol, Propanol, i-Propanol, Butanol, i-Butanol, Äthylenglykol und Glyzerin. Das Mischungsverhältnis von Alkohol zu Wasser kann von 100:1 bis 1:10 betragen, typisch ist ein Verhältnis von 6:1.

Die metallo-organischen Verbindungen werden in diesen Lösungsmittelgemischen in einer Gesamtkonzentration von 0,01 mol/l bis 0,1mol/l gelöst. Dabei beträgt das molare Verhältnis von Silizium zu den Beimischungen an den Elementen Aluminium, Barium, Blei, Bor, Lanthan, Magnesium, Titan, Zink und Zirkon von 100:0,1 bis 100:15.

Die farbbeeinflussenden Zusätze an Kobalt, Kupfer und Eisen können in Mengen von 100:0,1 bis 100:5 beigemischt werden.

Vor der Zumischung der metallo-organischen Verbindung wird der pH-Wert des Lösungsmittels mit einer anorganischen Säure, wie Salzsäure oder einer organischen Säure wie Essigsäure auf eine Wert zwischen 1 und 5 eingestellt.

Die Lösung der Ausgangsverbindungen in dem wasserhaltigen Lösungsmittel kann gegebenenfalls einige Zeit auf eine höhere Temperaturen, bis zum Siedepunkt des verwendeten Lösungsmittelgemisches, erhitzt werden, bis eine bei dieser Temperatur ausreichende Hydrolysereaktion der Ausgangsverbindungen mit Wasser erhalten wurde, so daß sich gerade noch nicht ein nennenswerter Niederschlag bildet.

Gegebenenfalls wird die Lösung heiß filtriert.

In die Lösung wird der zu beschichtende, pulverförmige Leuchtstoff eingerührt. Im Bedarfsfall wird dabei zusätzlich mit einem Dispergierer oder mit Ultraschall dispergiert, um zu verhindern, daß nicht vollständig dispergierte Agglomerate gemeinsam beschichtet werden. Die Konzentration des Leuchtstoffes in der Dispersion kann von 5g/l bis 200g/l betragen. Die besten Ergebnisse wurden mit Konzentrationen von 80-120g/l erzielt.

Diese Suspension wird einige Stunden bei der genannten Reaktionstemperatur gerührt. Dann wird die Suspension entsprechend ihrer natürlichen Abkühlkurve auf Raumtemperatur abgekühlt, weiterhin gerührt und mit Ammoniak versetzt, bis ein pH-Wert von 8-10 erreicht ist.

Die ammoniakalische Suspension kann noch einige Zeit bei Raumtemperatur weiter dispergiert werden, um die gewünschte Alterung der siliziumoxidhaltigen Beschichtung zu fördern, mit der sich die Beschichtungsdicke variieren läßt.

Dann wird das so erhaltene beschichtete Lumineszenzpulver durch geeignete Methoden wie Filtration oder Zentrifugieren von der Reaktionslösung abgetrennt und mit einem Lösungsmittelgemisch aus Ethanol und Wasser gewaschen.

Die Dicke der SiO₂-haltige Beschichtung ist durch die Dauer des Alterungsvorgangs variierbar. Typischerweise liegt die Dicke der Beschichtung zwischen 5 und 100 nm. Bestimmt wird die Schichtdicke entweder durch element-analytische Verfahren oder durch Oberflächenanalysenmethoden wie ESCA und EDAX.

Die durch das erfindungsgemäße Verfahren erhaltene amorphe SiO₂-haltige Beschichtung ist fast porenfrei und die wenigen vorhandenen Poren sind so klein, daß sie keinen chemischen Angriff des Substrates ermöglichen. Um die abschirmende Wirkung der Beschichtung gegen oxidativen Angriff auf oxidationsempfindliche Leuchtstoffe z.B Leuchtstoffe auf der Basis von ZnS zu untersuchen, werden die Lumineszenzpulver mit einer verdünnten, schwach violetten Kaliumpermanganat-Lösung versetzt. Durch unbehandelte Lumineszenzpulver wird die Kaliumpermanganatlösung sofort entfärbt, dagegen werden die erfindungsgemäß beschichteten Lumineszenzpulver auch nach einigen Stunden noch nicht angegriffen.

Da die amorphe Beschichtung keine Poren enthält, die größer sind als die Wellenlänge des Lichtes, die sie duchlassen soll, ist die Beschichtung hochtransparent.

Die Oberfläche der gebildeten amorphen SiO₂-haltigen Beschichtung ist hydrophil und die beschichteten Lumineszenzpulver haben unabhängig von ihrer chemischen Struktur die gleichen kolloid-chemischen Eigenschaften. Dadurch ist eine einheitliche Rezeptur der verschiedenen Suspensionen bei der Herstellung von Bildschirmen möglich und man erhält kolloid-chemisch stabile Suspensionen.

Für ihre Verwendung zur Herstellung von beschichteten Gegenständen, wie Entladungsröhren oder -lampen müssen aus den Lumineszenzpulvern stabile kolloidale Suspensionen gebildet werden, wobei es nicht nur von Bedeutung ist, daß die Suspensionen nicht zum Ausflocken durch Agglomeration neigen, sondern auch, daß Lumineszenzpulver aus chemisch sehr unterschiedlichen Leuchtstoffen möglichst gleiche kolloid-chemische Eigenschaften zeigen.

Die kolloid-chemische Stabilität kann durch Messung des Zeta-Potential der Suspensionen bestimmt werden. Die erfindungsgemäß mit amorphen SiO₂ beschichteten Leuchtstoffe verhalten sich dabei nach außen hin gleichmäßig wie amorphe SiO₂-Teilchen.

Man kann deshalb aus den erfindungsgemäßen beschichteten Lumineszenzpulvern für Beschichtungslösungen stabile kolloidale Lösungen mit einem einheitlichen pH-Wert von 10 > pH > 5 und stark negativ aufgeladenen Teilchen erzeugen, während die unbeschichteten Pulver aufgrund ihrer unterschiedlichen chemischen Struktur unterschiedliche Oberflächenaufladungen zeigen und individuell bei verschiedenen pH-Werten und durch weitere Maßnahmen stabilisiert werden müssen.

### Beispiel 1

0,576 l einer Lösung von Essigsäure in Wasser mit pH 5 werden mit 3,379l Ethanol gemischt. Die Lösung wird mit 45 ml Tetraethoxysilan versetzt und 0,5h bei Raumtemperatur gerührt. 400g eines grün lumineszierenden Leuchtstoffpulvers der chemischen Zusammensetzung Zn,CdS:Cu,Al werden in der Lösung dispergiert und 16h gerührt. Zu der Suspension werden dann 500ml einer 2-molaren Ammoniaklösung hinzugefügt und anschließend noch eine Stunde gerührt.

Das so beschichtete Lumineszenzpulver wird abzentrifugiert und mit einem Wasser/Ethanol-Gemisch (1:1) gewaschen und anschließend bei 120°C im Vakuum getrocknet.

Die Analyse der Pulveroberfläche mit dem ESCA-Verfahren ergab einen Abdeckungsgrad von 99,1%. Aus ESCA-Messungen in Verbindung mit einem gleichzeitigen Sputtern der Oberfläche kann die erreichte Schichtdicke zu 18 nm abgeschätzt werden.

Die chemische Stabilität der Oberfäche gegen Oxidation durch eine Permanganatlösung war gegenüber dem unbeschichteten Zn,CdS:Cu,Al um den Faktor 100 verbessert.

### Beispiel 2

4,01 einer 0,05 molaren Tetramethoxysilan-Lösung in Isopropanol werden mit Wasser, das mit Essigsäure auf pH 4,2 eingestellt wurde, gemischt, bis die Wasserkonzentration 8 mol/l beträgt. Diese Lösung wird eine Stunde auf 60°C erwärmt. Dann werden 400 g rot luminesziernder Leuchtstoff aus Y₂O₂S, der mit feinteiligem Fe₂O₃ und Latex pigmentiert ist, hinzugegeben und 16 h bei 60°C gerührt. Die Suspension wird dann auf Zimmertemperatur abgekühlt und tropfenweise mit 500 ml einer 2-molaren Ammoniaklösung versetzt. Die Lösung wird 5h gealtert, dann durch ein Filter dekantiert und gewaschen und getrocknet, wie in Beispiel 1 beschrieben.

Aufgrund der ESCA-Analyse kann man feststellen, daß die Oberfläche zu 95% abgedeckt ist.

Es wurde auch die Elektrolumineszenzausbeute von beschichtetem und unbeschichtetem Leuchtstoff bei einer Anregungsspannung von 10kV gemessen. Die Lumineszenzausbeute war durch die Beschichtung geringfügig um 0,7% im Vergleich zum unbeschichteten Leuchtstoff geschwächt.

### Beispiel 3

0,15l Wasser werden mit 1l Ethanol gemischt und der pH-Wert mit Essigsäure auf einen Wert von 4,2 eingestellt. In diesem Lösungsmittelgemisch werden 0,03 mol Tetraethoxysilan und 5 mmol Borsäureethylester gelöst. Die Lösung wird auf 60°C erwärmt und eine Stunde bei dieser Temperatur gehalten, dann heiß filtriert. In die filtrierte Lösung werden 130 g eines grün lumineszierenden ZnS:Cu-Leuchtstoffpulvers eingebracht und mit einem Hochgeschwindigkeitsrührer dispergiert. Die Lösung wurde unter Rühren abgekühlt. Dann wurde in die Lösung 0,4 mol Ammoniakgas eingeblasen und die Suspension noch 5 h gerührt.

Die Dispersion wurde zentrifugiert, mehrmals mit Alkohol und Wasser gewaschen und dann getrocknet.

### Beispiel 4

0,15l Wasser werden mit 1l Methanol gemischt und der pH-Wert mit Ameisensäure auf einen Wert von 3 eingestellt. In diesem Lösungsmittelgemisch werden 0,03 mol Tetraethoxysilan und 5 mmol Aluminium-tri-formiat gelöst. Diese Lösung wird auf 60°C erwärmt und eine Stunde bei dieser Temperatur gehalten, dann heiß filtriert. In die filtrierte Lösung werden 130 g eines grün lumineszierenden ZnS:Cu-Leuchtstoffpulvers eingebracht und mit einem Hochgeschwindigkeitsrührer dispergiert. Die Lösung wurde unter Rühren abgekühlt, dann wurde in die Lösung 0,4 mol Ammoniakgas eingeblasen und die Suspension noch 5h gerührt.

Die Dispersion wurde zentrifugiert, mehrmals mit Alkohol und Wasser gewaschen und dann getrocknet.

### Beispiel 5

In diesem Beispiel wurden Partikel eines rot lumineszierenden Leuchtstoffes aus Y₂O₃:Eu mit einer Beschichtung aus Silizium- und Zirkonoxid versehen, in die Eisenionen zur Farbgebung eingebaut wurden.

Dazu wird zunächst eine Lösung von 0.35 mol Tetramethoxysilan und 50 mmol Zirkon-tetra-isopropylat in 10l Isopropanol hergestellt und mit einer Lösung von 2l Wasser, das durch Zugabe von Essigsäure auf einen pH-Wert von 4 eingestellt wurde, versetzt. Gleichzeitig werden 10 mmol Eisen(III)acetylacetonat in 1l Isopropanol gelöst. Die Lösungen werden vereinigt und 2h auf 60 °C erhitzt.

In die vereinigten Lösungen werden 1200 g Y₂O₃:Eu-Pulver mittels eines Rührers eingerührt, 15 min in einer Ultraschalldurchflußzelle dispergiert und auf Raumtemperatur abgekühlt. Dann werden 1500 ml einer 2-molare Ammoniak-Lösung tropfenweise zugegeben und die Suspension noch 1h gerührt.

Die Aufarbeitung der Dispersion erfolgt wie in den voranstehenden Beispielen.

Man erhält einen leicht braun eingefärbten Leuchtstoff durch die in die Beschichtung eingebauten Eisen(III)Ionen.

Durch thermische Nachbehandlung des beschichteten Leuchtstoffes ist es möglich, die Farbe nach Rotbraun zu verändern.

### Beispiel 6

Es wird zunächst eine Lösung von 0.35 mol Tetramethoxysilan und 50 mmol Zinkacetat in 10 l Isopropanol hergestellt und mit einer Lösung von 2 l Wasser, das durch Zugabe von Essigsäure auf einen pH-Wert von 4 eingestellt wurde, versetzt.

In diese Lösung werden 1200 g des grünen Leuchtstoffes Y₂SiO₅:Tb mittels eines Rührers eingerührt, 15 min unter Ultraschall dispergiert und auf Raumtemperatur abgekühlt. Dann werden 1500 ml einer 2-molare Ammoniak-Lösung tropfenweise zugegeben und die Suspension noch 1h gerührt.

Die Aufarbeitung der Dispersion erfolgt wie in den voranstehenden Beispielen.

### Beispiel 7

Es wird zunächst eine Lösung von 0.35 mol Polyethylsilikat und 50 mmol Bariumacetat in 10 l Isopropanol hergestellt und mit einer Lösung von 2 l Wasser, das durch Zugabe von Essigsäure auf einen pH-Wert von 4 eingestellt wurde, versetzt. Gleichzeitig werden 10 mmol Aluminiumformiat in 1l Isopropanol gelöst. Die Lösungen werden vereinigt und 2h auf 60 °C erhitzt.

In die vereinigten Lösungen werden 1200 g ZnS:Ag-Pulver mittels eines Rührers eingerührt, 15 min in einer Ultraschalldurchflußzelle dispergiert und auf Raumtemperatur abgekühlt. Dann werden 1500 ml einer 2-molare Ammoniak-Lösung tropfenweise zugegeben und die Suspension noch 1h gerührt.

Die Aufarbeitung der Dispersion erfolgt wie in den voranstehenden Beispielen.

## Patentansprüche

1. Verfahren zur Beschichtung von Lumineszenzpulver mit einer Beschichtung, die Siliziumdioxid enthält,
dadurch gekennzeichnet,
daß in einem ersten Schritt Leuchtstoffpartikel in einer Lösung, die eine oder mehrere metallo-organische Verbindungen des Siliziums und gegebenenfalls metallo-organische Verbindungen weiterer Elemente in einem wasserhaltigen Lösungsmittelgemisch mit einem pH-Wert 1 < pH < 5 enthält, dispergiert werden und anschließend die metallo-organischen Verbindungen durch Hinzufügen von Ammoniak hydrolysiert werden.

2. Verfahren nach Anspruch 1,
dadurch gekennzeichnet,
daß die Leuchtstoffpartikel bei einer Temperatur von 40 - 90°C dispergiert werden und die so erhaltene Dispersion vor der Hydrolyse mit Ammoniak auf Raumtemperatur abgekühlt wird.

3. Verfahren nach Anspruch 1,
dadurch gekennzeichnet,
daß das Leuchtstoffpulver 1 bis 12 h in der ammoniakalischen Lösung dispergiert wird.

4. Verfahren nach Anspruch 1 bis 3,
dadurch gekennzeichnet,
daß die weiteren Elemente Aluminium, Barium, Blei, Bor, Lanthan, Magnesium, Titan, Zink und/ oder Zirkon sind und das Molverhältnis von den metallo-organischen Verbindungen des Siliziums zu den metallo-organischen Verbindungen der weiteren Elemente von 100: 0,1 bis 100:15 beträgt.

5. Verfahren nach Anspruch 1 bis 4,
dadurch gekennzeichnet,
daß die weiteren Elemente farbgebende Elemente wie Kobalt, Kupfer und Eisen sind und das Molverhältnis von den metallo-organischen Verbindungen des Siliziums zu den metallo-organischen Verbindungen der farbgebenden Elemente von 100: 0,1 bis 100:5 beträgt.

6. Lumineszenzpulver mit einer Beschichtung, die aus Siliziumoxid und mindestens einem Oxid eines weiteren Elementes besteht, wobei die weiteren Elemente aus der Gruppe Aluminium, Barium, Blei, Bor, Magnesium, Titan, Zink, Zirkon, Kobalt, Kupfer und Eisen ausgewählt sind.

7. Mit einem erfindungsgemäß beschichteten Lumineszenzpulver beschichteter Gegenstand, insbesondere Leuchtschirm oder Bildschirm.
